# EUROPÄISCHE PATENTSCHRIFT

(11) **EP 2 195 908 B1**
(45) Veröffentlichungstag und Bekanntmachung des Hinweises auf die Patenterteilung: **26.03.2014**
(21) Anmeldenummer: 08787348.5
(22) Anmeldetag: 20.08.2008
(51) Int. Cl.: H02K 1/27

(54) **ELEKTRISCHE MASCHINE UND ROTORANORDNUNG**
ELECTRIC MACHINE AND ROTOR ARRANGEMENT
MACHINE ÉLECTRIQUE ET ENSEMBLE ROTOR

(30) Priorität: 30.08.2007 DE 102007041099
(43) Veröffentlichungstag der Anmeldung: 16.06.2010
(73) Patentinhaber: Robert Bosch GmbH, 70442 Stuttgart (DE)
(72) Erfinder: EVANS, Susanne, 77815 Buehl (DE); EVANS, Steven Andrew, 77813 Buehl (DE)
(86) Internationale Anmeldenummer: PCT/EP2008/060900
(87) Internationale Veröffentlichungsnummer: WO 2009/027290

(56) Entgegenhaltungen:
- EP-A- 1 139 548
- DE-A1- 10 357 502
- JP-A- 2000 197 292
- US-A1- 2004 256 940
- US-A1- 2005 062 354

## Beschreibung

### Technisches Gebiet

Die Erfindung betrifft eine Rotoranordnung für eine elektrische Maschine, insbesondere für eine bürstenlose Permanentmagnet erregte Synchronmaschine mit vergrabenen Permanentmagneten und insbesondere eine Rotoranordnung, bei der das Rastmoment und die Drehmomentenwelligkeit reduziert ist.

### Stand der Technik

Um das Rastmoment und Drehmomentenwelligkeit eines elektrischen Antriebs, z.B. eines bürstenlosen Permanentmagnet erregten Synchronmotors, bei dem der Rotor vergrabene Permanentmagnete aufweist, zu reduzieren, werden die Rotorpolschuhe des Rotors mit einer bestimmten Form versehen. Die Formung der Rotorpolschuhe erfolgt in einer Weise, dass eine möglichst sinusförmige Luftspaltflussdichteverteilung entsteht.

Bislang wird dazu der äußere Rand des Polschuhs mit einer Kontur versehen, durch die zwischen zwei benachbarten Rotorpolschuhen ein Luftspalt gebildet wird und die ausgehend vom Zentrum des Rotorpolschuhs im wesentlichen entsprechend einer inversen Cosinusfunktion verläuft. Eine derartig geformte Kontur eines Rotorpolschuhs wird als so genannte Richter-Kontur (Richter, R., Elektrische Maschinen, Bd. I, Allgemeine Berechnungselemente, Die Gleichstrommaschine, 3. Aufl., Birkhäuser-Verlag, Basel 1967, Seiten 168-170) bezeichnet.

Die Richter-Kontur erzeugt eine Luftspaltflussdichtenverteilung mit einem Klirrfaktor von typischerweise weniger als 2% und somit eine fast ideale sinusförmige Luftspaltflussdichteverteilung. Das Herstellen eines Rotors mit einer Richter-Kontur ist aufwendig in Design und Herstellung und man verwendet zur Vereinfachung deshalb auch eine Bogenkontur für die Außenkontur der Rotorpolschuhe. Die Bogenkontur ist definiert durch einen Außenradius eines Kreissegmentes, das einen kleineren Radius aufweist als der Rotoraußendurchmesser und dessen Mittelpunkt zur Welle des Rotors entlang der Mittellinie des betreffenden Rotorpolschuhs versetzt ist. Eine solche so genannte zentrumsversetzte Bogenkontur ist eine einfache Annäherung an die Richter-Kontur und erzeugt annähernd eine sinusförmige Luftspaltflussdichteverteilung mit einem Klirrfaktor von ca. 5%. Dies führt zwar zu einem etwas höheren Rastmoment und einer höheren Drehmomentenwelligkeit als bei einem Rotor mit einer Richter-Kontur, der Entwurf und die Herstellung einer derartigen Rotoranordnung wird jedoch erheblich vereinfacht.

Der für eine möglichst sinusförmige Luftspaltflussdichteverteilung optimale Bogenradius bei Verwendung der zentrumsversetzten Bogenkontur und sein Versatz aus dem Wellenzentrum ist jedoch nicht bekannt.

Die US 2004256940 A1 und die JP 2000197292 zeigen einen Rotor mit vergrabenen Magneten, wobei die Magneten in dafür vorgesehen Taschen gelagert sind. Die Magneten erstrecken sich im Wesentlichen in tangentialer Richtung bezüglich des Umfangs des Rotors. Radial außen am Umfang des Rotors ist an jedem Magneten eine runde Kontur angeformt, deren Ausdehnung jeweils einen Magneten in tangentialer Richtung überragen.

Es ist daher Aufgabe der vorliegenden Erfindung, eine elektrische Maschine sowie eine Rotoranordnung für eine elektrische Maschine zur Verfügung zu stellen, deren Rotorpolschuhe eine zentrumsversetzte Bogenkontur aufweist, wobei die Rotoranordnung hinsichtlich einer möglichst sinusförmigen Luftspaltflussdichteverteilung optimiert ist.

Diese Aufgabe wird durch die elektrische Maschine gemäß Anspruch 1 und durch die Rotoranordnung gemäß Anspruch 7 gelöst.

Weitere vorteilhafte Ausgestaltungen der Erfindung sind in den abhängigen Ansprüchen angegeben.

### Offenbarung der Erfindung

Die Erfindung betrifft eine elektrische Maschine, insbesondere für eine Permanentmagnet erregten Synchronmaschine. Die Elektrische Maschine umfasst eine Rotoranordnung mit vergrabenen Permanentmagneten, und eine Statoranordnung mit einer Innenausnehmung zur drehbeweglichen Aufnahme der Rotoranordnung. Die Rotoranordnung umfasst mehrere Rotorsegmente, die jeweils einen Polschuh aufweisen, dessen Außenkontur einer Bogenkontur mit einem Konturradius entspricht, wobei der.Konturradius kleiner ist als der Radius der Rotoranordnung, so dass zwischen zwei benachbarten Rotorsegmenten ein Spalt entsteht. Die mindestens eine Außenkontur eines der Rotorsegmente weist eine Bogenkontur auf, die so gestaltet ist, dass ein Luftspaltlängenverhältnis des radialen Abstandes zwischen der Innenausnehmung und der Außenkontur entlang einer radialen Außenbegrenzung des entsprechenden Rotorsegmentes und des radialen Abstandes zwischen der Innenausnehmung und der Außenkontur entlang einer radialen Mittenachse des entsprechenden Rotorsegmentes hinsichtlich des Klirrfaktors des Verlaufs der Flussdichteverteilung des Polschuhs optimiert ist, wobei insbesondere das Luftspaltlängenverhältnis so gewählt ist, dass der Klirrfaktor minimiert ist. Vorzugsweise kann das Luftspaltlängenverhältnis zwischen 2,6 und 2,9 liegen.

Bei einer derartigen elektrische Maschine wird eine Bogenkontur als Außenkontur der Polschuhe vorgesehen, die deutlicher einfacher in einer Rotoranordnung zu implementieren ist, als eine optimalere Richter-Kontur. Durch die Optimierung eines Parameters der Bogenkontur ist es möglich den Flussdichteverlauf der Polschuhe an den sinusförmigen Idealverlauf anzunähern.

Weiterhin kann seitlich der Permanentmagnete ein Flussbarrierenbereich zwischen dem Permanentmagneten und der seitlichen Begrenzung des Rotorsegmentes vorgesehen sein, um einen Kurzschluss des magnetischen Flusses durch das dem Permanentmagneten zugeordnete Rotorsegment zu unterdrücken.

Gemäß einer Ausführungsform können weitere Flussbarrierenbereiche zwischen dem Permanentmagneten und der Außenkontur des zugeordneten Polschuhs vorgesehen sein, die an den den seitlichen Begrenzungen des Rotorsegmentes zugewandten Seiten des Permanentmagneten angeordnet sind, um die effektive Breite des Permanentmagneten in tangentialer Richtung der Rotoranordnung zu verringern.

Weiterhin kann das Verhältnis zwischen der durch die weiteren Flussbarrierenbereiche verringerte Breite des Permanentmagneten und die der Gesamtbreite des Permanentmagneten hinsichtlich des Klirrfaktors des Verlaufs der Flussdichteverteilung des Polschuhs optimiert sein. Insbesondere kann das Verhältnis zwischen der durch die weiteren Flussbarrierenbereiche verringerte Breite des Permanentmagneten und die der Gesamtbreite des Permanentmagneten in einem Bereich zwischen 0,77 und 0,81, insbesondere bei 0,79 liegen.

Die Rotoranordnung kann eine Folgepolanordnung aufweisen, bei der nur jedes zweite Rotorsegment mit Permanentmagneten versehen ist, wobei die Permanentmagnete eine gleichartige Polung bezüglich der radialen Richtung aufweisen, wobei an den beiden Begrenzungen eines der zwischen zwei mit Permanentmagneten versehenen Rotorsegmenten angeordneten Folgepol-Rotorsegmentes jeweils Folgepol-Flussbarrierenbereiche vorgesehen sind, die einen Folgepolwinkel bezüglich dem Mittelpunkt der Rotoranordnung definieren, wobei die Folgepol-Flussbarrierenbereiche ausgebildet sind, so dass ein Verhältnis des Folgepolwinkels zu dem Winkel des Rotorsegmentes hinsichtlich des Klirrfaktors des Verlaufs der Flussdichteverteilung des Polschuhs optimiert ist. Insbesondere kann das Verhältnis des Folgepolwinkels zu dem Winkel des Rotorsegmentes im Bereich von 0,73 bis 0,76, insbesondere bei 0,75 liegen.

Gemäß einem weiteren Aspekt ist eine Rotoranordnung, insbesondere für eine Permanentmagnet erregte Synchronmaschine, vorgesehen. Die Rotoranordnung umfasst mehrere Rotorsegmente, die jeweils einen Polschuh aufweisen, dessen Außenkontur einer Bogenkontur mit einem Konturradius entspricht, wobei der Konturradius kleiner ist als der Radius der Rotoranordnung, so dass zwischen zwei benachbarten Rotorsegmenten ein Spalt entsteht; wobei mindestens ein Rotorsegment einen vergrabenen Permanentmagneten aufweist. Weiterhin sind weitere Flussbarrierenbereiche zwischen dem Permanentmagneten und der Außenkontur des zugeordneten Polschuhs vorgesehen, die an den den seitlichen Begrenzungen des Rotorsegmentes zugewandten Seiten des Permanentmagneten angeordnet sind, um die effektive Breite des Permanentmagneten in tangentialer Richtung der Rotoranordnung zu verringern, wobei das Verhältnis zwischen der durch die weiteren Flussbarrierenbereiche verringerte Breite des Permanentmagneten und die Gesamtbreite des Permanentmagneten hinsichtlich des Klirrfaktors des Verlaufs der Flussdichteverteilung des Polschuhs optimiert ist, und insbesondere in einem Bereich zwischen 0,77 und 0,81, insbesondere bei 0,79 liegt.

Eine derartige Rotoranordnung ermöglicht ebenfalls die Optimierung des Flussdichteverlaufs bei Verwendung einer Bogenkontur als Außenkontur eines Polschuhs.

### Kurzbeschreibung der Figuren

Bevorzugte Ausführungsformen der Erfindung werden nachfolgend anhand der beigefügten Zeichnungen näher erläutert. Es zeigen:
- Fig. 1: eine schematische Schnittdarstellung durch eine elektrische Maschine gemäß dem Stand der Technik;
- Fig. 2: eine Darstellung der Rotoranordnung der elektrischen Maschine aus Fig. 1;
- Fig. 3: eine Rotoranordnung, bei der die Rotorpolschuhe eine Bogenkontur aufweisen, gemäß einer Ausführungsform der Erfindung;
- Fig. 4: eine Schnittdarstellung eines Rotorsegmentes und einer Rotoranordnung gemäß der vorliegenden Erfindung;
- Figs. 5a - 5e: Ausschnitte einer Rotoranordnung, die jeweils ein Rotorsegment darstellen mit verschiedenen Luftspaltlängenverhältnissen;
- Fig. 6: eine Darstellung des Klirrfaktors der Luftspaltflussdichte abhängig von den Luftspaltlängenverhältnissen, die in Figs 5a - 5e dargestellt sind;
- Fig. 7: eine Darstellung des Klirrfaktors der Luftspaltflussdichte abhängig von dem Polschuh-Magnetbreiten-Verhältnis und dem Luftspaltlängenverhältnis in einem Bereich zwischen einem Luftspaltlängenverhältnis von 1 bis 3,5 und insbesondere in einem Bereich von 2,6 bis 2,9;
- Fig. 8: eine Tabelle, die für verschiedene Rotordurchmesser und für unterschiedliche Polzahlen und Magnethöhen das optimale Luftspaltlängenverhältnis und das optimale Polschuh-Magnetbreiten-Verhältnis angibt;
- Fig. 9: eine Rotoranordnung mit einer Folgepolanordnung, die einen FolgepolFlussbarrierenbereich aufweist;
- Fig. 10: ein Diagramm für den Klirrfaktor der Luftspaltflussdichte abhängig von dem Folgepolschuh-Polteilungs-Verhältnis.

### Ausführungsformen der Erfindung

Bei den nachfolgend gezeigten Ausführungsbeispielen stellen gleiche Bezugszeichen Elemente gleicher oder vergleichbarer Funktion dar.

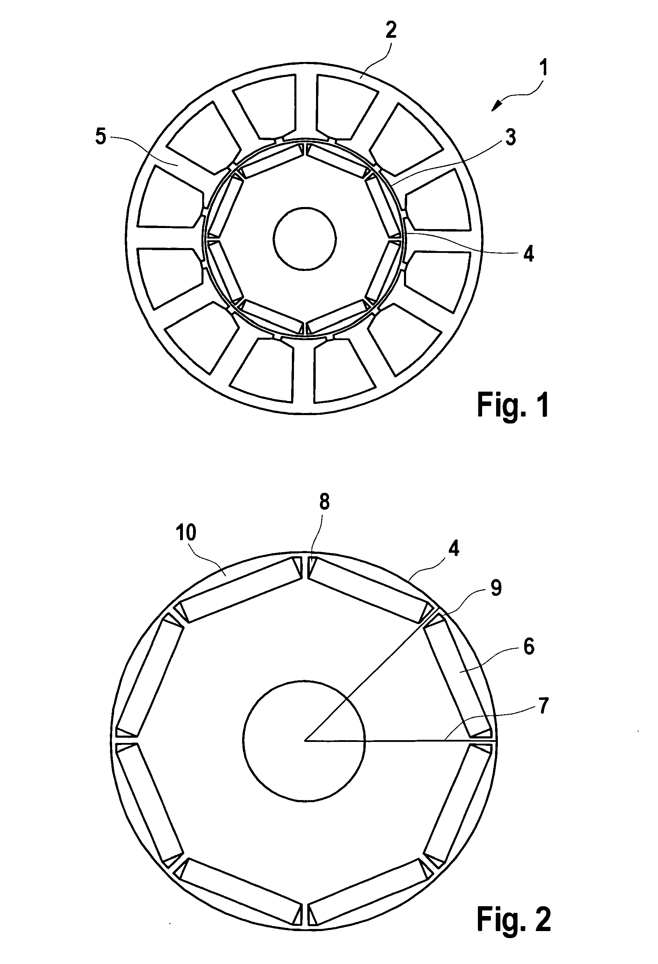

Fig. 1 zeigt eine Querschnittsdarstellung durch eine elektrische Maschine insbesondere durch einen permanentmagneterregten Synchronmotor 1 mit einer Statoranordnung 2, in der sich eine Statorausnehmung 3 befindet. In der Statorausnehmung 3 ist eine Rotoranordnung 4 um eine Welle drehbar angeordnet. Die Statoranordnung 2 weist in Richtung der Rotoranordnung 4 (nach innen) weisende Statorzähne 5 auf, die alle oder teilweise von (nicht gezeigten) Statorspulen umwickelt sind. Die Statorzähne 5 sind zur Statorausnehmung 3 hin verbreitert und jeweils mit einer kreissegmentförmigen Kontur versehen, die einen Großteil der Innenfläche der Statorausnehmung 3 definiert. Die Statoranordnung 2 ist vorzugsweise in axialer Richtung (Axiale Richtung der Rotoranordnung) aus Blechen zusammengesetzt, die vorzugsweise durch Stanzen hergestellt werden, so dass die Statoranordnung 2 als Blechpaket zur Verfügung gestellt wird.

In Fig. 2 ist eine detailliertere Darstellung der Rotoranordnung 4 gezeigt. Die Rotoranordnung 4 weist Permanentmagnete 6 auf, die im Inneren der Rotoranordnung 4 in Taschen 9 angeordnet ist, und somit "vergraben" sind. Die Permanentmagnete 6 sind jeweils in Rotorsegmenten 7 angeordnet, und weisen jeweils einen Polschuh 10 auf. Die Polung der Permanentmagnete 6 ist in radialer Richtung. Um zu verhindern, dass ein magnetischer Kurzschluss innerhalb eines Rotorsegments 7 an dem Permanentmagneten 6 vorbei erfolgt, sind die Taschen 9 größer als die darin aufzunehmenden Permanentmagnete 6 ausgebildet, so dass seitlich neben den Permanentmagneten 6, d.h. in tangentialer Richtung der Rotoranordnung 4 bzw. in Richtung zum benachbarten Rotorsegment, jeweils eine Flussbarrierenbereich 8 vorgesehen ist, der im Wesentlichen als luftgefüllte Ausnehmung in dem die Rotoranordnung 4 bildenden Blechpaket ausgebildet ist. Die Flussbarrierenbereiche 8 zweier benachbarter Rotorsegmente 7 sind voneinander durch einen Steg in der Rotoranordnung 4 getrennt, um die in radialer Richtung außerhalb befindlichen Abschnitte der Rotoranordnung 4, die die Polschuhe 10 darstellen, an der Rotoranordnung 4zu fixieren.

Die Permanentmagnete 6 sind in den entsprechend ausgebildeten Taschen 9 in der Rotoranordnung vorgesehen, wobei die Taschen eine Form aufweisen, so dass nach Einsetzen des Permanentmagneten 6 die Flussbarrierenbereiche 8 auf beiden Seiten des Permanentmagneten 6 (in tangentialer Richtung) verbleiben. Wie in Fig. 2 gezeigt, können herkömmliche Polschuhe einer Rotoranordnung 4 auch ohne bestimmte Kontur ausgebildet sein, so dass die Außenkontur der Rotoranordnung kreisförmig ist.

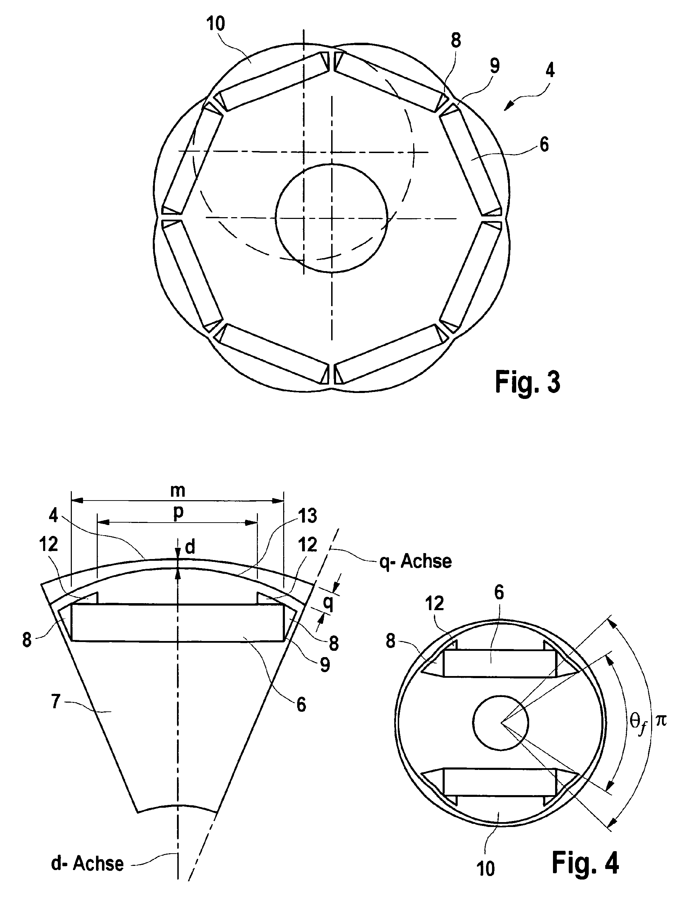

In Fig. 3 ist eine Rotoranordnung 4 gezeigt, bei der Polschuhe 10 mit einer Bogenkontur versehen sind, um eine möglichst sinusförmige Luftspaltflussdichteverteilung zu erreichen. Die Bogenkontur ist als Kreissegment eines zu dem Mittelpunkt der Welle der Rotoranordnung 4 entlang einer radialen Mittellinie (Symmetrielinie) des entsprechenden Rotorsegmentes 7 versetzten Hilfskreises definiert, der einen entsprechend geringeren Radius als die Rotoranordnung aufweist.

In Fig. 4 ist ein Rotorsegment 7 der Rotoranordnung 4 ausschnittsweise dargestellt. Das Rotorsegment 7 umfasst die Tasche 9, in der der Permanentmagnet 6 eingebettet ist. Die Tasche 9 weist vorzugsweise eine Form auf, so dass nach Einbringen des Permanentmagneten 6 seitlich des Permanentmagneten, d.h. in im Wesentlichen tangentialer Richtung die o.a. Flussbarrierenbereiche 8 verbleiben, um zu verhindern, dass ein magnetischer Kurzschluss durch das Material des Rotorsegmentes 7 erfolgen kann.

Weiterhin kann die Tasche 9 so ausgebildet sein, dass nach Einsetzen des Permanentmagneten 6 oberhalb, d.h. in radialer Richtung nach außen, ein weiterer Flussbarrierenbereich 12 an den Seiten des Permanentmagneten 6 verbleibt. Der weitere Flussbarrierenbereich 12 erstreckt sich beidseitig von der dem benachbarten Rotorsegment 7 zugeordneten Kante entlang des Verlaufs der in radialer Richtung äußeren Fläche des Permanentmagneten 6. Vorzugsweise verläuft die äußere Begrenzung des weiteren Flussbarrierenbereichs 12 im Wesentlichen parallel zur Außenkontur des Polschuhs 10. Die weiteren Flussbarrierenbereiche 12 definieren die wirksame Polschuhbreite p, die bei Vorsehen der weiteren Flussbarrierenbereiche 12 kleiner ist als die Magnetbreite m.

Die Außenkontur 13 des Polschuhs 10 ist im Wesentlichen kreissegmentförmig und weist einen geringeren Radius auf als der Radius der Rotoranordnung. Das gesamte Rotorsegment 7 ist im Wesentlichen zu einer d-Achse spiegelsymmetrisch aufgebaut. Zwischen der Statorausnehmung 3 und der Außenkontur 13 des Rotorsegmentes 7 bestehen aufgrund der unterschiedlichen Krümmungsradien verschiedene Abstände. Bei den so gebildeten Luftspalten wird der Luftspaltabstand zwischen der Innenfläche der Statorausnehmung 3 und der Außenkontur an der d-Achse als d und der Luftspaltabstand zwischen den Flächen entlang der q Achse als q bezeichnet. Die Beziehung zwischen dem Innenradius der Statorausnehmung 3, des Radius der Rotoranordnung 4 und der Außenkontur 13 der Polschuhe 10 kann durch das Luftspaltlängenverhältnis q/d der Luftspaltabstände von den entsprechenden Radien unabhängig definiert werden.

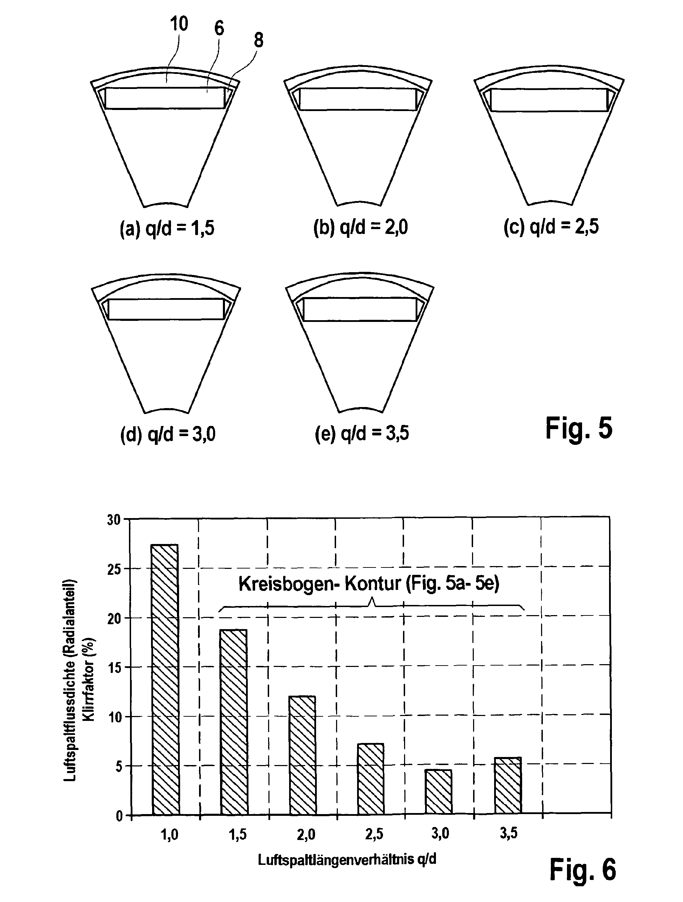

In den Figuren 5a - 5e sind beispielhaft für verschiedene Luftspaltlängenverhältnisse q/d verschiedene Ausgestaltungen von Rotorsegmenten 7 dargestellt, bei denen man erkennt, dass je stärker die Krümmung der Außenkontur des Polschuhs ist, umso größer ist der Abstand q gegenüber dem Abstand d. Überprüft man nun den Luftspaltflussdichtenverlauf eines derartigen Polschuhs mit einer Bogenkontur abhängig von dem Luftspaltlängenverhältnis für die Luftspaltlängenverhältnisse 1,0, 1,5, 2,0, 2,5, 3,0, 3,5, so erkennt man wie in Fig. 6 als Diagramm dargestellt, dass der geringste Klirrfaktor der Luftspaltflussdichten (d.h. die beste Annäherung an einen sinusförmigen Luftspaltflussdichtenverlauf) bei einem Luftspaltlängenverhältnis von etwa 3 erreicht wird. Genauere Untersuchungen ergeben, dass das optimale Luftspaltlängenverhältnis im Bereich von 2,6 bis 2,9, vorzugsweise im Bereich von 2,7 bis 2,8 und weiter bevorzugt im Bereich von 2,7 bis 2,75, insbesondere bei 2,7 liegt.

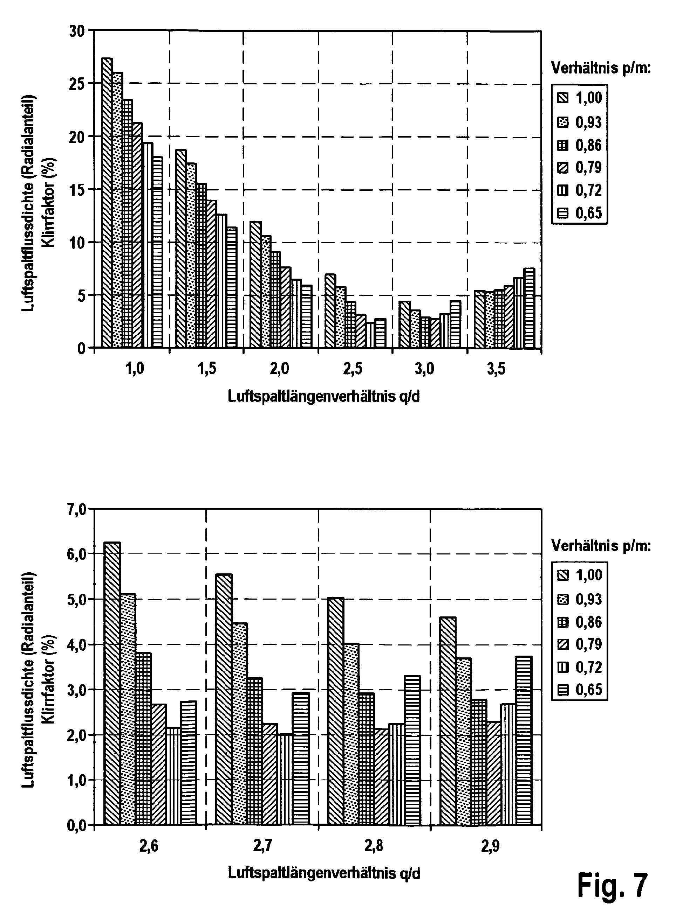

Bei der Auslegung der Rotoranordnung 4, wie sie in Figuren 3 und 4 dargestellt ist, kann weiterhin das Polschuh-Magnetbreiten-Verhältnis p/m optimiert werden. Dieses wird durch die Breite der weiteren Flussbarrierenbereiche 12 bestimmt, die die radial nach außen gerichtete Seite des Permanentmagneten 6 an deren den benachbarten Rotorsegmenten 7 zugeordneten Kantenbereichen überdeckt. Wie man aus Fig. 7 entnehmen kann, liegt bei verschiedenen Luftspaltlängenverhältnissen das optimale Polschuh.Magnetbreiten-Verhältnis p/m in einem Bereich zwischen 0,65 und 1, vorzugsweise in einem Bereich zwischen 0,77 und 0,81 und weiter bevorzugt bei 0,79. Die Breite der weiteren Flussbarrierenbereiche 12 beeinflusst dabei nicht oder in nicht feststellbarem Maße den optimalen Wert des Luftspaltlängenverhältnis q/d.

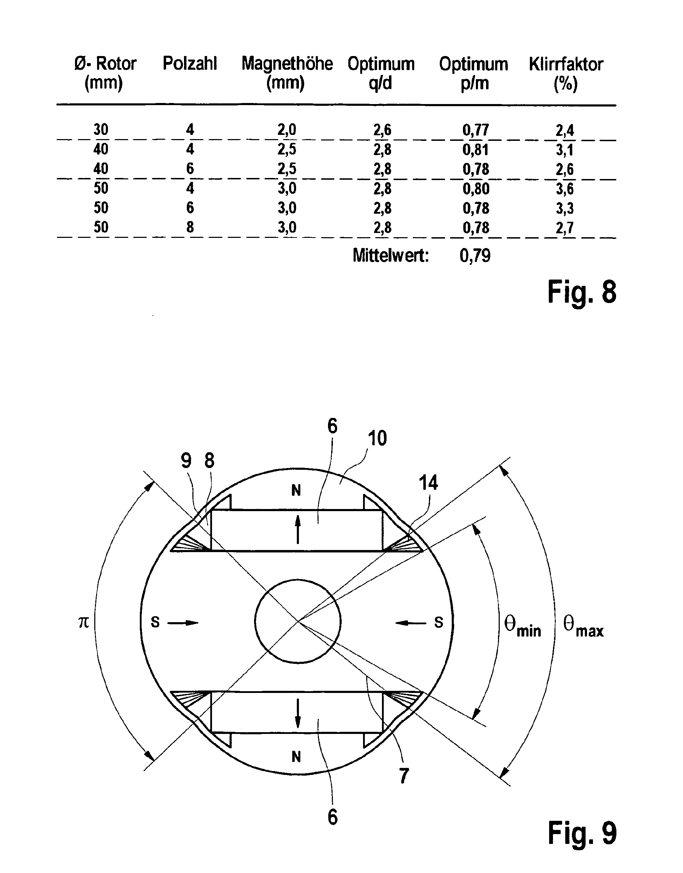

In der Tabelle der Fig. 8 ist das optimale Luftspaltlängenverhältnis q/d und die optimalen Polschuh-Magnetbreiten-Verhältnisse p/m für verschiedene Rotordurchmesser, verschiedene Polzahlen und verschiedene Magnethöhen dargestellt und man erkennt, dass sich das optimale Luftspaltlängenverhältnis nur unwesentlich im Bereich zwischen 2,6 und 2,8 und das optimale Polschuh-Magnetbreiten-Verhältnis im Bereich von 0,77 bis 0,81 ändert.

Fig. 9 ist beispielhaft eine Rotoranordnung 4 gemäß einer weiteren Ausführungsform der Erfindung gezeigt. Die Rotoranordnung 4 der Fig. 9 ist vierpolig und weist nur zwei Permanentmagnete 6 auf. Die Permanentmagnete 6 sind zueinander entgegengesetzt gepolt und bezüglich der Welle der Rotoranordnung 4 gegenüberliegend angeordnet und bilden so eine Folgepolanordnung. Die mit Permanentmagneten 6 versehenen Polschuhe sowie die Folgepol-Polschuhe sind entsprechend eines optimierten Luftspaltlängenverhältnisses q/d = 2,8 ausgebildet. Bei den mit Permanentmagneten 6 versehenen Polschuhe sind die Taschen 9 entsprechend dem optimierten Polschuh-Magnetbreiten-Verhältnis p/m von 0,79 ausgebildet, wie es zuvor beschrieben ist. Dadurch wird eine annähernd sinusförmiger Verlauf der Flussdichte der mit den Permanentmagneten versehenen Polschuhe 10 sowie der Folgepol-Polschuhe erreicht.

Die Ausführungsform der Fig. 9 ist nicht auf 4 Pole beschränkt, sondern es kann eine Folgepolanordnung mit einer beliebigen geraden Anzahl von Polen vorgesehen sein.

Um die Luftspaltflussdichte des Folgepols weiter hinsichtlich ihres sinusförmigen Verlaufs zu optimieren, werden in jedem Rotorsegment 7 eines der Folgepole Folgepol-Flussbarrierenbereiche 14 beispielsweise als Ausnehmungen seitlich an den radialen Begrenzungen der Rotorsegmente 7 der Folgepole vorgesehen, um die effektive Folgepolschuhbreite zu reduzieren. Die Folgepol-Flussbarrierenbereiche 14 können ebenfalls Teil der Taschen 9 für die Permanentmagnete 6 sein und sind insbesondere als Verlängerungen der Flussbarrierenbereiche 8 in Richtung einer Mittellinie des Rotorsegmentes 7 des Folgepols vorgesehen. Die Form der Folgepol-Flussbarrierenbereiche 14 kann im wesentlichen beliebig sein, vorzugsweise weist die Folgepol-Flussbarrierenbereiche 14 jedoch einen in radialer Richtung begrenzten Rand auf, der dem Verlauf der Außenkontur der Rotoranordnung 4 folgt.

Ausgehend von dem Winkel des Rotorsegmentes, der sich aus 360° geteilt durch die Gesamtanzahl der Pole ergibt, ergibt sich bezüglich des Mittelpunkts der Rotoranordnung 4 und der kleinsten durch die Folgepol-Flussbarrierenbereiche 14 definierte Breite des Folgepols ein gegenüber dem Winkel des Rotorsegments 7 reduzierter Winkel. D.h. der reduzierte Winkel ergibt sich aus dem maximalen Winkel bezüglich des Mittelpunkts der Rotoranordnung 4, der durch zwei vom Mittelpunkt ausgehende radiale Linien, die nicht durch die Folgepol-Flussbarrierenbereiche 14 unterbrochen ist, möglich ist. Dieser reduzierte Winkel wird somit durch die Länge bestimmt, mit der die Folgepol-Flussbarrierenbereiche 14 in das Rotorsegment 7 des Folgepols hineinragt.

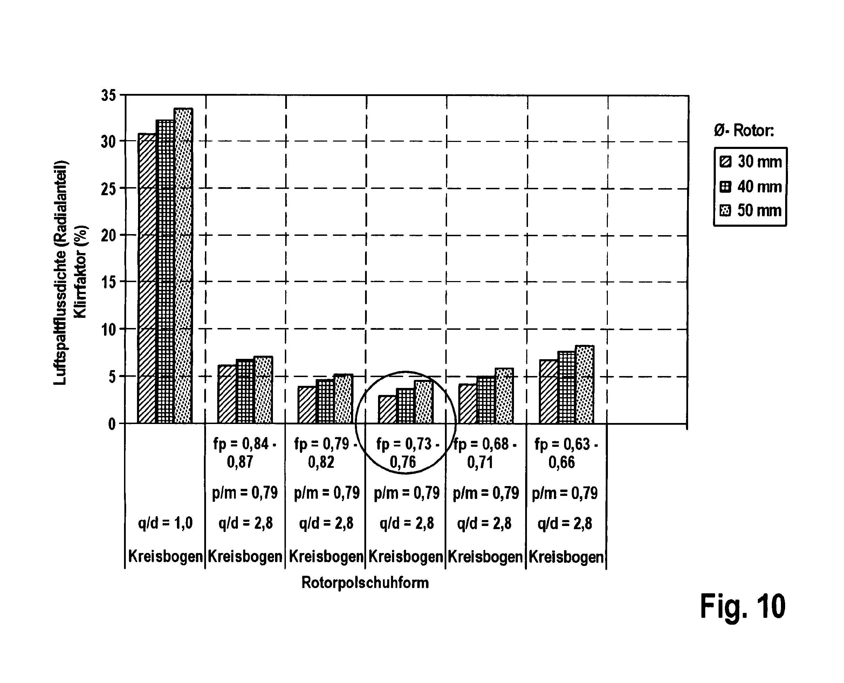

Das Verhältnis zwischen dem reduzierten Winkel des Folgepols und dem gesamten Winkel eines Rotorsegmentes 7 wird als Folgepolschuh-Polteilungsverhältnis θ_{f/p} bezeichnet. Eine empirische Untersuchung des optimalen Folgepolschuh-Polteilungsverhältnis für verschiedene Rotordurchmesser bei optimalem Luftspaltlängenverhältnis q/d =2,8 und optimalem Polschuh-Magnetbreiten-Verhältnis p/m=0,79 ist in Fig. 10 gezeigt. Aus Fig. 10 ergibt sich ein optimales Folgepolschuh-Polteilungs-Verhältnis im Bereich zwischen 0,63 bis 0,87, vorzugsweise im Bereich zwischen 0,73 bis 0,76 und insbesondere weiter bevorzugt für 0,73.

## Patentansprüche

1. Elektrische Maschine, insbesondere eine Permanentmagnet erregte Synchronmaschine, umfassend:
- eine Rotoranordnung (4) mit vergrabenen Permanentmagneten (6);
- eine Statoranordnung (2) mit einer Innenausnehmung (3) zur drehbeweglichen Aufnahme der Rotoranordnung (4);
- wobei die Rotoranordnung (4) mehrere Rotorsegmente (7) umfasst, die jeweils einen Polschuh (10) aufweisen, dessen Außenkontur einer Bogenkontur mit einem Konturradius entspricht, wobei der Konturradius kleiner ist als der Radius der Rotoranordnung (4), so dass zwischen zwei benachbarten Rotorsegmenten (7) ein Spalt entsteht;
**dadurch gekennzeichnet, dass** die mindestens eine Außenkontur eines der Rotorsegmente (7) eine Bogenkontur aufweist, die so gestaltet ist, dass ein Luftspaltlängenverhältnis des radialen Abstandes zwischen der Innenausnehmung und der Außenkontur entlang einer radialen Außenbegrenzung des entsprechenden Rotorsegmentes (7) und des radialen Abstandes zwischen der Innenausnehmung und der Außenkontur entlang einer radialen Mittenachse des entsprechenden Rotorsegmentes (7) zwischen 2,6 und 2,9 liegt.

2. Elektrische Maschine nach Anspruch 1, **dadurch gekennzeichnet, dass** seitlich der Permanentmagnete (6) ein Flussbarrierenbereich zwischen dem Permanentmagneten (6) und der seitlichen Begrenzung des Rotorsegmentes vorgesehen ist, um einen Kurzschluss des magnetischen Flusses durch das dem Permanentmagneten (6) zugeordnete Rotorsegment (7) zu unterdrücken.

3. Elektrische Maschine nach einem der Ansprüche 1 bis.2, **dadurch gekennzeichnet, dass** weitere Flussbarrierenbereiche zwischen dem Permanentmagneten (6) und der Außenkontur des zugeordneten Polschuhs (10) vorgesehen sind, die an den den seitlichen Begrenzungen des Rotorsegmentes (7) zugewandten Seiten des Permanentmagneten (6) angeordnet sind, um die effektive Breite des Permanentmagneten (6) in tangentialer Richtung der Rotoranordnung (4) zu verringern.

4. Elektrische Maschine nach Anspruch 3, **dadurch gekennzeichnet, dass** das Verhältnis zwischen der durch die weiteren Flussbarrierenbereiche verringerte Breite des Permanentmagneten (6) und der Gesamtbreite des Permanentmagneten (6) hinsichtlich des Klirrfaktors des Verlaufs der Flussdichteverteilung des Polschuhs (10) optimiert ist.

5. Elektrische Maschine nach einem der Ansprüche 1 bis 4, **dadurch gekennzeichnet, dass** die Rotoranordnung (4) eine Folgepolanordnung aufweist, bei der nur jedes zweite Rotorsegment (7) mit Permanentmagneten (6) versehen ist, wobei die Permanentmagnete (6) eine gleichartige Polung bezüglich der radialen Richtung aufweisen,
wobei an den beiden Begrenzungen eines der zwischen zwei mit Permanentmagneten (6) versehenen Rotorsegmenten (7) angeordneten Folgepol-Rotorsegmentes jeweils Folgepol-Flussbarrierenbereiche vorgesehen sind, die einen Folgepolwinkel bezüglich dem Mittelpunkt der Rotoranordnung (4) definieren, wobei die Folgepol-Flussbarrierenbereiche ausgebildet sind, so dass ein Verhältnis des Folgepolwinkels zu dem Winkel des Rotorsegmentes (7) hinsichtlich des Klirrfaktors des Verlaufs der Flussdichteverteilung des Polschuhs (10) optimiert ist.

6. Elektrische Maschine nach Anspruch 5, **dadurch gekennzeichnet, dass** das Verhältnis des Folgepolwinkels zu dem Winkel des Rotorsegmentes (7) im Bereich von 0,73 bis 0,76, insbesondere bei 0,75 liegt.

7. Rotoranordnung (4), insbesondere für eine Permanentmagnet erregte Synchronmaschine, umfassend:
- mehrere Rotorsegmente (7), die jeweils einen Polschuh (10) aufweisen, dessen Außenkontur einer Bogenkontur mit einem Konturradius entspricht, wobei der Konturradius kleiner ist als der Radius der Rotoranordnung (4), so dass zwischen zwei benachbarten Rotorsegmenten (7) ein Spalt entsteht; wobei mindestens ein Rotorsegment (7) einen vergrabenen Permanentmagneten (6) aufweist;
**dadurch gekennzeichnet, dass**
weitere Flussbarrierenbereiche zwischen dem Permanentmagneten (6) und der Außenkontur des zugeordneten Polschuhs (10) vorgesehen sind, die an den den seitlichen Begrenzungen des Rotorsegmentes (7) zugewandten Seiten des Permanentmagneten (6) angeordnet sind, um die effektive Breite des Permanentmagneten (6) in tangentialer Richtung der Rotoranordnung (4) zu verringern,
wobei das Verhältnis zwischen der durch die weiteren Flussbarrierenbereiche verringerten Breite des Permanentmagneten (6) und der Gesamtbreite des Permanentmagneten (6) zwischen 0,77 und 0,81, insbesondere bei 0,79 liegt.

8. Elektrische Maschine mit einer Rotoranordnung (4) nach Anspruch 7.

## Claims

1. Electric machine, in particular a permanent magnet synchronous machine, comprising:
- a rotor arrangement (4) with buried permanent magnets (6);
- a stator arrangement (2) having an inner cutout (3) for accommodating, in rotationally movable fashion, the rotor arrangement (4);
- wherein the rotor arrangement (4) comprises a plurality of rotor segments (7), which each have a pole shoe (10), whose outer contour corresponds to an arc contour with a contour radius, wherein the contour radius is smaller than the radius of the rotor arrangement (4), with the result that a gap is produced between two adjacent rotor segments (7);
**characterized in that** the at least one outer contour of one of the rotor segments (7) has an arc contour which is configured such that an air gap length ratio of the radial distance between the inner cutout and the outer contour along a radial outer limit of the corresponding rotor segment (7) and the radial distance between the inner cutout and the outer contour along a radial mid-axis of the corresponding rotor segment (7) is between 2.6 and 2.9.

2. Electric machine according to Claim 1, **characterized in that** a flux barrier region is provided between the permanent magnet (6) and the lateral limit of the rotor segment to the side of the permanent magnets (6) in order to suppress a short circuit of the magnetic flux through the rotor segment (7) associated with the permanent magnet (6).

3. Electric machine according to either of Claims 1 and 2, **characterized in that** further flux barrier regions are provided between the permanent magnet (6) and the outer contour of the associated pole shoe (10), which flux barrier regions are arranged on those sides of the permanent magnet (6) which face the lateral limits of the rotor segment (7), in order to reduce the effective width of the permanent magnet (6) in the tangential direction of the rotor arrangement (4).

4. Electric machine according to Claim 3, **characterized in that** the ratio between the width of the permanent magnet (6) that is reduced by the further flux barrier regions and the total width of the permanent magnet (6) is optimized in respect of the total harmonic distortion of the profile of the flux density distribution of the pole shoe (10).

5. Electric machine according to one of Claims 1 to 4, **characterized in that** the rotor arrangement (4) has a consequent pole arrangement, in which only every second rotor segment (7) is provided with permanent magnets (6), wherein the permanent magnets (6) have identical polarization with respect to the radial direction, wherein in each case consequent-pole flux barrier regions are provided at the two limits of a consequent-pole rotor segment which is arranged between two rotor segments (7) provided with permanent magnets (6), which consequent-pole flux barrier regions define a consequent-pole angle with respect to the centre point of the rotor arrangement (4), wherein the consequent-pole flux barrier regions are designed in such a way that a ratio of the consequent-pole angle to the angle of the rotor segment (7) is optimized with respect to the total harmonic distortion of the profile of the flux density distribution of the pole shoe (10).

6. Electric machine according to Claim 5, **characterized in that** the ratio of the consequent-pole angle to the angle of the rotor segment (7) is in the range of from 0.73 to 0.76, in particular 0.75.

7. Rotor arrangement (4), in particular for a permanent magnet synchronous machine, comprising:
- a plurality of rotor segments (7), which each have a pole shoe (10), whose outer contour corresponds to an arc contour with a contour radius, wherein the contour radius is less than the radius of the rotor arrangement (4), with the result that a gap is produced between two adjacent rotor segments (7); wherein at least one rotor segment (7) has a buried permanent magnet (6); **characterized in that** further flux barrier regions between the permanent magnet (6) and the outer contour of the associated pole shoe (10) are provided which are arranged on those sides of the permanent magnet (6) which face the lateral limits of the rotor segment (7) in order to reduce the effective width of the permanent magnet (6) in the tangential direction of the rotor arrangement (4), wherein the ratio between the width of the permanent magnet (6), reduced by the further flux barrier regions, and the total width of the permanent magnet (6) is between 0.77 and 0.81, in particular 0.79.

8. Electric machine comprising a rotor arrangement (4) according to Claim 7.

## Revendications

1. Machine électrique, en particulier machine synchrone excitée par aimants permanents, comprenant :
- un agencement de rotor (4) avec des aimants permanents encastrés (6) ;
- un agencement de stator (2) avec un évidement interne (3) pour recevoir, de manière mobile en rotation, l'agencement de rotor (4) ;
- l'agencement de rotor (4) comprenant plusieurs segments de rotor (7) qui présentent chacun une pièce polaire (10) dont le contour extérieur correspond à un contour arqué ayant un rayon de contour, le rayon de contour étant inférieur au rayon de l'agencement de rotor (4), de telle sorte qu'entre deux segments de rotor adjacents (7) se forme une fente ;
**caractérisée en ce que** l'au moins un contour extérieur de l'un des segments de rotor (7) présente un contour arqué qui est configuré de telle sorte qu'un rapport de longueur d'entrefer de la distance radiale entre l'évidement interne et le contour extérieur le long d'une limitation extérieure radiale du segment de rotor correspondant (7) sur la distance radiale entre l'évidement interne et le contour extérieur le long d'un axe médian radial du segment de rotor correspondant (7) soit compris.entre 2,6 et 2,9.

2. Machine électrique selon la revendication 1, **caractérisée en ce qu'**une région de barrière antiflux entre l'aimant permanent (6) et la limitation latérale du segment de rotor est prévue latéralement aux aimants permanents (6), afin de supprimer un court-circuit du flux magnétique à travers le segment de rotor (7) associé à l'aimant permanent (6).

3. Machine électrique selon l'une quelconque des revendications 1 à 2, **caractérisée en ce que** d'autres régions de barrière antiflux entre l'aimant permanent (6) et le contour extérieur de la pièce polaire associée (10) sont prévues, lesquelles sont disposées au niveau des côtés de l'aimant permanent (6) tournés vers les limitations latérales du segment de rotor (7), afin de réduire la largeur effective de l'aimant permanent (6) dans la direction tangentielle de l'agencement de rotor (4).

4. Machine électrique selon la revendication 3, **caractérisée en ce que** le rapport entre la largeur de l'aimant permanent (6) réduite par les autres régions de barrière antiflux et la largeur totale de l'aimant permanent (6) est optimisé en termes de facteur de distorsion de la courbe de répartition de la densité de flux de la pièce polaire (10).

5. Machine électrique selon l'une quelconque des revendications 1 à 4, **caractérisée en ce que** l'agencement de rotor (4) présente un agencement de pôles suiveurs dans lequel seulement un segment de rotor (7) sur deux est muni d'aimants permanents (6), les aimants permanents (6) présentant une polarité de même type par rapport à la direction radiale,
des régions de barrière antiflux de pôles suiveurs étant à chaque fois prévues au niveau des deux limitations d'un segment de rotor à pôles suiveurs disposé entre deux segments de rotor (7) pourvus d'aimants permanents (6), lesquelles définissent un angle de pôles suiveurs par rapport au centre de l'agencement de rotor (4), les régions de barrière antiflux de pôles suiveurs étant réalisées de telle sorte qu'un rapport de l'angle de pôles suiveurs sur l'angle du segment de rotor (7) soit optimisé en termes de facteur de distorsion de la courbe de répartition de la densité de flux de la pièce polaire (10).

6. Machine électrique selon la revendication 5, **caractérisée en ce que** le rapport de l'angle de pôles suiveurs à l'angle du segment de rotor (7) est dans la plage de 0,73 à 0,76, en particulier de 0,75.

7. Agencement de rotor (4), en particulier pour une machine synchrone excitée par aimants permanents, comprenant :
- plusieurs segments de rotor (7) qui présentent chacun une pièce polaire (10) dont le contour extérieur correspond à un contour arqué ayant un rayon de contour, le rayon de contour étant inférieur au rayon de l'agencement de rotor (4), de telle sorte qu'entre deux segments de rotor adjacents (7) se forme une fente ; au moins un segment de rotor (7) présentant un aimant permanent encastré (6) ;
**caractérisé en ce que**
d'autres régions de barrière antiflux entre l'aimant permanent (6) et le contour extérieur de la pièce polaire associée (10) sont prévues, lesquelles sont disposées au niveau des côtés de l'aimant permanent (6) tournés vers les limitations latérales du segment de rotor (7), afin de réduire la largeur effective de l'aimant permanent (6) dans la direction tangentielle de l'agencement de rotor (4),
le rapport entre la largeur de l'aimant permanent (6) réduite par les autres régions de barrière antiflux et la largeur totale de l'aimant permanent étant compris entre 0,77 et 0,81, notamment étant de 0,79.

8. Machine électrique comprenant un agencement de rotor (4) selon la revendication 7.
